# EUROPÄISCHE PATENTSCHRIFT

(11) **EP 3 334 018 B1**
(45) Veröffentlichungstag und Bekanntmachung des Hinweises auf die Patenterteilung: **14.08.2019**
(21) Anmeldenummer: 16203334.4
(22) Anmeldetag: 12.12.2016
(51) Int. Cl.: H02K 21/22, H02K 1/27, H02K 7/02, H02K 15/03

(54) **AUSSENLÄUFERMAGNETEINHEIT**
EXTERNAL ROTOR MAGNET UNIT
UNITÉ MAGNÉTIQUE DE ROTOR EXTERNE

(43) Veröffentlichungstag der Anmeldung: 13.06.2018
(73) Patentinhaber: Enrichment Technology Company Ltd. Zweigniederlassung Deutschland, 52409 Jülich (DE)
(72) Erfinder: Weller, Andreas, 52074 Aachen (DE)
(74) Vertreter: FARAGO Patentanwälte

(56) Entgegenhaltungen:
- EP-A1- 3 057 191
- DE-A1-102004 058 451
- DE-A1-102009 027 916

## Beschreibung

### Gebiet der Erfindung

Die Erfindung bezieht sich auf eine Magneteinheit als Außenläufer für eine Motor-Generator-Einheit, auf eine Schwungradeinheit mit einer solchen Magneteinheit in der Motor-Generator-Einheit und auf Verfahren zur Herstellung einer solchen Magneteinheit und einer solchen Schwungradeinheit.

### Hintergrund der Erfindung

Schwungrad-Energiespeicher benötigen eine Motor-Generator-Einheit einerseits mit einem Motor, um den Schwungradkörper (Rotor) zur Aufnahme von Energie zu beschleunigen und andererseits mit einem Generator, um die gespeicherte Rotationsenergie wieder abgeben zu können, wobei der Schwungradkörper abgebremst wird. Die Energie wird dabei vorzugsweise durch den Generator in Form von elektrischer Energie abgegeben. In den industriellen Anwendungen wird dabei typischerweise ein Permanent-Magnet (PM) Motor eingesetzt, der gleichzeitig auch als Generator arbeiten kann. Vorteilhaft ist bei diesem Prinzip die hohe Leistung des PM-Motor/Generators und die sehr kurze Ansprechzeit, mit der Energie vom Schwungradkörper aufgenommen oder wieder abgegeben werden kann.

Solche Motoren gibt es in vielen Anwendungen als Innenläufer, bei dem sich die Magnete auf der Rotorwelle befinden. Hierbei sind die Magnete als Ringmagnet oder als Magnetsegment außen auf der Rotorwelle montiert, beispielsweise geklebt und armiert, damit die Magnete bei der Rotordrehzahl nicht reißen oder sich von der Rotorwelle ablösen. Der magnetische Spalt zwischen Rotor und Stator wird durch die außen auf dem Magneten aufliegende Armierung entsprechend groß, was die Motor-Generator-Leistung und den Wirkungsgrad begrenzt. Für Anwendungen mit hohem Wirkungsgrad und hohen Leistungen werden dagegen Magnete als Außenläufer angeordnet. Dabei befinden sich die Magnete am Innendurchmesser des rotierenden Teils der Motor-Generator-Einheit, wobei sich der Stator im Zentrum des rotierenden Teils der Motor-Generator-Einheit befindet. Damit können höhere Drehmomente, Spitzenleistungen, Leistungsdichten und Wirkungsgrade mit der Motor-Generator-Einheit erreicht werden. Der magnetische Spalt zwischen Rotor und Stator kann bei Außenläufern minimal ausgeführt werden, weil sich keine störende Bandage oder Armierung zwischen Magneten und Stator befindet.

Bei großen Abmessungen des rotierenden Motorteils, wie beispielsweise bei Schwungrädern zur Energiespeicherung, sind die Kräfte, die auf die Magneten aufgrund der Rotation wirken, entsprechend groß. Gerade bei Umdrehungsgeschwindigkeiten mit Drehzahlen von 30.000 Umdrehungen pro Minute steigen die Spannungen und Dehnungen auf die Magnete stark an. Bei diesen Drehzahlen sind die verfügbaren Magnete nicht stabil genug, um einen kontinuierlichen Langzeitbetrieb standzuhalten. Stattdessen reißen die Magnete und verlieren damit allmählich ihre magnetischen Eigenschaften, wodurch zunächst der Wirkungsgrad der Motor-Generator-Einheit sinkt und diese am Ende gänzlich versagt.

Es wäre daher wünschenswert, eine unter hohen Rotationsgeschwindigkeiten langzeitig belastbare Magneteinheit für eine Motor-Generator-Einheit mit hohem Wirkungsgrad und hoher Leistung zur Verfügung zu haben.

### Zusammenfassung der Erfindung

Es ist daher eine Aufgabe der vorliegenden Erfindung, eine unter hohen Rotationsgeschwindigkeiten langzeitig belastbare Magneteinheit für eine Motor-Generator-Einheit mit hohem Wirkungsgrad und hoher Leistung zur Verfügung zu stellen.

Diese Aufgabe wird gelöst durch eine Magneteinheit geeignet als Außenläufer für eine Motor-Generator-Einheit umfassend einen Haltering aus einem Faserverbundmaterial mit einer einer Mittelachse des Halterings zugewandten Innenseite, auf der ein die Innenseite umlaufendes Verbindungsblech aus einem lastwechselfesten Material mittels einer geeigneten ersten Kleberschicht mit einer ersten Dicke befestigt ist, das eine Vielzahl an axial ausgerichteten Schlitzen umfasst, die Zwischenräume im Verbindungsblech bilden und dieses so in eine Vielzahl an axial ausgerichteten Blechstreifen unterteilen, wobei jeweils benachbarte Blechstreifen zumindest zunächst über Verbindungsstege miteinander verbunden sind und auf dem Verbindungsblech eine Vielzahl an zumindest magnetisierbaren Magnetsegmenten in einer umlaufenden Anordnung mittels einer zweiten Kleberschicht mit einer zweiten Dicke befestigt sind, wobei die jeweiligen Breiten der Blechstreifen und der Magnetsegmente in umlaufender Richtung der Innenseite so aufeinander angepasst sind, dass jedes Magnetsegment nur auf einem jeweils eigenen Blechstreifen aufgeklebt ist und die Vielzahl an Magnetsegmenten in der Magneteinheit in Kontakt zueinander nebeneinander angeordnet sind. Durch die Mittelachse des Halterings läuft dabei die Rotationsachse des Magnetrings im Betrieb in der Motor-Generator-Einheit. Hierbei kann die Innenseite in einer Ausführungsform parallel zur vorgesehenen Drehachse der Magneteinheit ausgerichtet sein. Die ersten und zweiten Dicken bezeichnen hierbei die durchschnittlichen Dicken der ersten und zweiten Kleberschichten, da die lokalen Dicken der jeweiligen Schichten aufgrund von Herstellungstoleranzen zwischen unterschiedlichen Orten gegebenenfalls leicht variieren können. Die erfindungsgemäße Magneteinheit ist insbesondere geeignet für Motor-Generator-Einheiten für Schwungradeinheiten mit hohen Betriebs-Umdrehungsgeschwindigkeiten. Hohe Betriebs-Umdrehungsgeschwindigkeiten bezeichnen dabei Umdrehungsgeschwindigkeiten von mehr als 24.000 Umdrehungen pro Minute.

Die erfindungsgemäße Magneteinheit ermöglicht durch den besonderen Aufbau mit Kleberschichten und Verbindungsblech zwischen Haltering und Magnetsegmenten den Betrieb von Schwungrädern mit sehr robusten lastwechselfesten Motor-Generator-Einheiten, die unter hohen Rotationsgeschwindigkeiten langzeitig mit hoher Leistung und hohem Wirkungsgrad betrieben werden können, wobei die Magneteinheiten sogar 10⁶ Lastwechsel zwischen 0 - 500Hz aushalten. Das Material des Halterings ist ein Faserverbundwerkstoff, vorzugsweise kohlenstofffaserverstärkter Kunststoff (CFK oder PFK). Dieser Haltering ist steifer als der Rotor ausgelegt, um die Dehnung auf die Magnete zu reduzieren. Der Haltering (Bandage) darf aber nicht zu steif sein, da sonst die Pressung des Halterings in den Rotor bei der Herstellung einer Schwungradeinheit den Rotor zerstören kann. Das Material des Verbindungsblechs muss für die jeweiligen Betriebsbedingungen ein lastwechselfestes Material sein. Das Verbindungsblech kann dafür beispielsweise aus Aluminium, vorzugsweise Aluminium 7075, gefertigt sein. Die Dicke des Verbindungsblechs liegt vorzugsweise in der Größenordnung von 1mm. Die Breiten der Blechstreifen und der Magnete sollten vorzugsweise so gewählt werden, dass auf dem Haltering möglichst viele Magnete angeordnet werden können, um viele Spalte zwischen den Magneten zu bilden wodurch die Belastung auf die einzelnen Magnetsegmente reduziert wird. Das Verbindungsblech nimmt dabei die Spannungen in der Anordnung auf, während die Klebeschichten die Dehnung zwischen den Komponenten vermittelt. Somit wird hier im Gegensatz zu Anordnungen im Stand der Technik die Dehnung nicht in die Magnete eingebracht, sondern von der Klebeschicht aufgenommen. Durch die Zwischenräume aufgrund der Spalte zwischen den Blechstreifen wird keine Zugspannung mehr zwischen den Blechstreifen auf die Magnetsegmente übertragen. Die Zwischenräume bleiben je nach Herstellungsprozess ungefüllt oder füllen sich mit Material, das in die Zwischenräume beim Herstellungsprozess der Magneteinheit eindringt. Die Zwischenräume können dabei als Aufnahmereservoir für das Material der Kleberschichten bei Einstellung der ersten und zweiten Schichtdicken der Kleberschichten dienen. In einer Ausführungsform sind daher zumindest einige der Zwischenräume zumindest teilweise mit einem Material der ersten und/oder zweiten Kleberschicht gefüllt. Die Verbindungsstege verbinden zumindest zunächst die Blechstreifen miteinander, da in anderen Ausführungsformen diese gewollt später unter Belastung brechen sollen, um die Zugspannung auf die Magnete zu reduzieren. Die Bezeichnung "zumindest zunächst" bezeichnet die Eigenschaft, dass die Verbindungsstege während der Montage des Magnetrings intakt sein sollten, damit das Verbindungsblech in der gewünschten Form auf dem Haltering mit erster Kleberschicht angeordnet werden kann, wobei die Verbindungsstege zu einem späteren Zeitpunkt wunschgemäß nicht mehr intakt sind.

Die erfindungsgemäße Magneteinheit ist somit eine unter hohen Rotationsgeschwindigkeiten langzeitig belastbare Magneteinheit für eine Motor-Generator-Einheit mit hoher Leistung und hohem Wirkungsgrad, da aufgrund der Gestaltung der Magneteinheit die Motor-Generator-Einheit mit einer geringen Spaltbreite zwischen Magneteinheit und Statoreinheit betrieben werden kann, da die langzeitig belastbare Magneteinheit von ihrer Geometrie so stabil ist, dass der Betrieb mit einer geringen Spaltbreite ermöglicht wird.

In einer Ausführungsform umfasst die erste und/oder zweite Kleberschicht ein oder mehrere geeignete Abstandshalter, deren Ausdehnung in radialer Richtung der jeweiligen gewünschten Dicke der ersten und/oder zweiten Kleberschicht entspricht. Über einen direkten Kontakt der Abstandshalter in der ersten Kleberschicht gleichzeitig zum Haltering und dem Verbindungsblech beziehungsweise in der zweiten Kleberschicht gleichzeitig zum Verbindungsblech und den Magnetsegment werden die jeweiligen ersten und/oder zweiten Dicken der ersten und/oder zweiten Kleberschicht auf den gewünschten Wert eingestellt. Eine dünnere Schichtdicke wird durch die Abstandshalter verhindert, eine zu große Dicke dadurch vermieden, dass das Verbindungsblech beziehungsweise die Magnetsegmente bei der Herstellung des Magnetrings in mechanischen Kontakt zu den Abstandshaltern gebracht werden, beispielsweise durch Ausübung eines Drucks auf das Verbindungsblech beziehungsweise die Magnetsegmente, bis dieser Kontakt hergestellt ist. Die zuverlässige Einstellung von geeigneten Schichtdicken der ersten und zweiten Kleberschicht ist für die Erhöhung der Belastbarkeit der Magnete vorteilhaft. Für Magneteinheiten, die für hohe Drehzahlen eines entsprechend angetriebenen Rotors geeignet sind, beträgt eine geeignete Schichtdicke der Kleberschichten beispielsweise 100 - 300µm, vorzugsweise zwischen 150 - 250µm. Hierbei können je nach Anwendung und verwendetem Verbindungsblech die Dicken der ersten und zweiten Kleberschicht gleich oder unterschiedlich gewählt sein. In einer Ausführungsform sind erste und zweite Dicke gleich und betragen 200µm. Die Form der Abstandshalter kann dabei unterschiedlich gestaltet und auf die jeweilige Ausführungsform angepasst sein.

In einer Ausführungsform sind die Abstandshalter Kugeln mit geeigneten Durchmessern, die zusammen mit der ersten und/oder zweiten Klebeschicht aufgebracht werden. Der Durchmesser entspricht hier der Ausdehnung des Abstandshalters in radialer Richtung. Kugeln sind einfach zum Klebermaterial hinzuzugeben und zusammen mit diesem einfach aufzubringen, da Kugeln keine Vorzugsrichtung definieren und somit ohne weiteren Aufwand immer die geeignete Ausdehnung in radialer Richtung besitzen. Die Kugeln können aus jedem für die Belastung geeigneten Material hergestellt sein, vorzugsweise aus Glas. Vorzugsweise wird die Anzahl der Kugeln in der Kleberschicht so angepasst, dass sich in Mittel 15 - 25 Kugeln, vorzugsweise 20 Kugeln, zwischen der Innenseite des Halterings und dem Verbindungsblech beziehungsweise zwischen dem Verbindungsblech und den Magnetsegmenten befinden.

In einer weiteren Ausführungsform sind die Abstandshalter ein oder mehrere Drähte mit geeigneten Durchmessern, die zumindest teilweise umlaufend auf der Innenseite des Halterings beziehungsweise zumindest teilweise umlaufend auf dem Verbindungsblech vor dem Aufbringen der ersten beziehungsweise zweiten Kleberschicht angeordnet sind. Die Drähte können dabei beispielsweise aus Edelstahl oder Nylon bestehen. Die Aufbringung der Drähte ist zwar aufwendiger als die der Glaskugeln, dafür kann aber vermieden werden, dass sich Kugeln zwischen den Magnetsegmenten befinden, die für die Anordnung der Magnetsegmente wieder mit Zusatzaufwand entfernt werden müssten. Die Drähte können sich aufgrund ihrer Länge und Anordnung nicht ungewollt zwischen die Magnetsegmente schieben. Im Gegensatz zur Ausführungsform mit Glaskugeln kann die Kleberschicht bei der Verwendung von Drähten leicht auf die Innenseite beziehungsweise das Verbindungsblech aufgestrichen werden. Überzähliger Kleber kann beim Aufbringen der Magnetsegmente unter anderem in die Zwischenräume zwischen den Blechstreifen verdrängt werden.

Die Ausführungsformen mit Kugeln oder Drähten können in einer weiteren Ausführungsform auch kombiniert werden, wo beispielsweise die erste oder zweite Kleberschicht Kugeln umfasst und die jeweils andere Kleberschicht Drähte umfasst. In einer weiteren Ausführungsform betragen die geeigneten Durchmesser zwischen 100 - 300µm, vorzugsweise zwischen 150 - 250µm.

In einer weiteren Ausführungsform umfassen die erste und die zweite Kleberschicht jeweils einen Klebstoff aus der Familie der Methylacrylate. Vorzugsweise bestehen die erste und die zweite Kleberschicht jeweils vollständig aus einem Klebstoff aus der Familie der Methylacrylate. Kleber aus dieser Materialfamilie verbessern die Belastbarkeit der Magnetsegmente. Solche Kleber vereinen hohe Klebekraft mit großer Elastizität, sind sehr dehnfähig und zeigen unter Belastung keine oder nur vernachlässigbare Risse und akzeptieren sehr hohe Drücke und Spannungen. Ferner behalten diese Materialien über Jahre ihre mechanischen Eigenschaften bei. Im Gegensatz dazu wäre Epoxydkleber weniger oder nicht geeignet.

In einer weiteren Ausführungsform sind die Verbindungsstege als Sollbruchstelle zwischen den Blechstreifen geeignet ausgeführt, damit diese während eines Anfangsbetriebs der Schwungradeinheit brechen. Die geeignete Ausführung ermöglicht das vorgesehene Brechen. Hierbei können die Verbindungsstege deutlich schmaler ausgeführt sein, als die Breite der Blechstreifen beträgt. Vorzugsweise beträgt das Verhältnis der Breite der Verbindungsstege weniger als die Hälfte der Breite der Blechstreifen, wobei die Breite der Blechstreifen in Umlaufrichtung entlang der Innenseite des Halterings und die Breite der Verbindungsstege in axialer Richtung zu betrachten ist. Die axiale Richtung bezeichnet hierbei die Richtung parallel zur vorgesehenen Rotationsachse der Magneteinheit. Im gebrochenen Zustand der Verbindungsstege werden keine Zugspannungen mehr zwischen den benachbarten Blechstreifen übertragen, was die Belastung der Magnetsegmente im Betrieb verringert und daher die Belastbarkeit der Magnete bei höheren Drehzahlen verbessert. Als Anfangsbetrieb wird die Betriebsdauer bis zum Erreichen der ersten 100 Lastwechsel bezeichnet. Nachdem die Blechstreifen nur noch über die Kleberschichten miteinander verbunden sind, übertragen sie in Umfangsrichtung kaum noch Kräfte auf die Magnetsegmente. Im Rahmen der Elastizität der Kleberschicht können die Magnetsegmente nun leicht gegeneinander verkippen, sodass Winkelfehler der Seitenflächen bei der Herstellung der Magnetsegmente so ausgeglichen werden können, dass auch diese Magnetsegmente aneinander anliegen können. Auch dies verringert die Belastung der Magnetsegmente im Betrieb und erhöht damit die langzeitige Belastbarkeit der Magneteinheit.

In einer weiteren Ausführungsform umfasst die Anordnung der Magnetsegmente auf dem Verbindungsblech mindestens ein Ausgleichsstück, vorzugsweise umfasst mindestens ein Ausgleichsstück ein Befestigungsmittel für eine Führungsmöglichkeit. Durch ein oder mehrere Ausgleichsstücke können geometrische Fertigungstoleranzen der Magnetsegmente ausgeglichen werden, damit diese in Kontakt zueinander dennoch möglichst mittig auf den Blechstreifen befestigt werden können. Das Ausgleichsstück kann dabei selbst auch aus einem magnetisierbaren Material bestehen. Die Führungsmöglichkeit kann dabei verschieden ausgestaltet sein, beispielsweise als aufgeschraubter Nutenstein, wobei das Ausgleichsstück ein entsprechendes Gewinde zum Aufschrauben aufweist. Eine solche Führungsmöglichkeit ist insbesondere dann vorteilhaft, wenn in axialer Richtung (axial) mehrere Magneteinheiten hintereinander in den Rotor gefügt werden und die Motorpole unterschiedlicher Magneteinheiten zueinander fluchten sollen.

In einer Ausführungsform besitzen die Magnetsegmente in axialer Richtung einen trapezförmigen Querschnitt mit einer kurzen Seite und einer dazu parallelen langen Seite und zwischen den kurzen und langen Seiten befindliche Seitenflächen. Die parallelen kurzen und langen Seiten stellen die Grundseiten des Trapezes dar. Durch die Trapezform wird zum einen ein maximaler magnetischer Fluss durch die Magnetanordnung realisiert. Hierbei können die Magnetsegmente abwechselnd mit der kurzen und langen Seite zu dem Verbindungsblech in Kontakt zueinander angeordnet sein. In einer alternativen Anordnung sind die Magnetsegmente jeweils mit der langen Seite zu dem Verbindungsblech in Kontakt zueinander angeordnet, wobei das Verhältnis zwischen den kurzen und langen Seiten der jeweiligen Magnetsegmente so angepasst ist, dass eine Verlängerungen der jeweiligen Seitenflächen der Magnetsegmente in der Mittelachse des Halterings (beziehungsweise in der Rotationsachse des Rotors der Schwungradeinheit) zusammenlaufen, wobei der Formschluss ein Herausfallen der Magnete selbst bei einem eventuellen Versagen der Kleberschicht verhindert. Die Trapezform ist hierbei nahezu quadratisch, was auch Materialspannungen innerhalb eines Magnetsegments zu reduzieren hilft. Hierbei können in axialer Richtung auch mehrere Magnete hintereinander ein gemeinsames Magnetsegment bilden, um ein ungünstiges Längen-Querschnittsverhältnis der einzelnen Magnete zu vermeiden. Die Breite der Magnetsegmente in umlaufender Richtung entspricht der durchschnittlichen Breite bei trapezförmigem Querschnitt, hier die Hälfte der Summe der Längen der kurzen und langen Seiten.

In einer weiteren Ausführungsform sind die Magnetsegmente zumindest auf einer Seite und damit zumindest teilweise mit einer Kontaktschicht beschichtet. Diese Kontaktschicht kann dabei auf den Flächen der Magnetsegmente in Kontakt mit der Kleberschicht als Passivierungsschicht aufgebracht sein, um die Klebungen zu verbessern. Die Kontaktschicht kann aber auch auf den Seitenflächen der Magnetsegmente, die mit benachbarten Magnetsegmenten in Kontakt stehen, aufgebracht sein. Diese Kontaktschicht kann die Magnetsegmente in anderen Ausführungsformen auch vollständig einhüllen. Vorzugsweise besteht die Kontaktschicht aus Ni, Cu oder Sn oder aus mehreren Schichten dieser Materialien oder aus einem Material geeignet zur chemischen Passivierung wie beispielsweise Cr oder Cr/Ni. Vorzugsweise besitzt die Kontaktschicht eine Dicke von 5 - 12µm, um die Oberfläche der Magnetsegmente zu glätten beziehungsweise zu passivieren, was unter anderem die Oberflächenkerbwirkung des einen Magnetsegments reduziert, und/oder um die Klebeigenschaften der Magnetsegmente zu verbessern, was dann zu einer höheren Belastbarkeit der Magneteinheit im Betrieb führt.

Die Erfindung betrifft des Weiteren eine Schwungradeinheit umfassend einen zumindest teilweise innen hohlen Rotor aus einem Faserverbundmaterial mit einer Innenseite und eine auf der Innenseite des Rotors geeignet angeordnete erfindungsgemäße Magneteinheit, die zusammen mit einem Stator eine Motor-Generator-Einheit zum Rotieren des Rotors bildet, wobei die Magneteinheit auf der Innenseite des Rotors so montiert ist, dass die Magneteinheit im Betrieb der Schwungradeinheit den Stator umläuft. Dadurch wird der Betrieb von Schwungrädern mit sehr robusten lastwechselfesten Motor-Generator-Einheiten, die unter hohen Rotationsgeschwindigkeiten langzeitig einen hohen Wirkungsgrad zeigen, ermöglicht, wobei die Magneteinheiten sogar 10⁶ Lastwechsel zwischen 0 - 500Hz aushalten. Die erfindungsgemäße Schwungradeinheit ist somit unter hohen Rotationsgeschwindigkeiten mit hoher Leistung und hohem Wirkungsgrad betreibbar, da aufgrund der Gestaltung der Magneteinheit die Motor-Generator-Einheit als Außenläufer mit einer geringen Spaltbreite zwischen Magneteinheit und Statoreinheit betrieben werden kann, da die langzeitig belastbare Magneteinheit von ihrer Geometrie dafür ausreichend stabil ist.

In einer Ausführungsform der Schwungradeinheit ist der Haltering der Magneteinheit über ein oder mehrere flexible Verbindungselemente mit der Innenseite des Rotors verbunden. Rotoren aus Faserverbundmaterial besitzen bei optimaler Auslastung des Laminats eine Dehnung von üblicherweise 1%, während die Dehnung des Halterings vorzugsweise geringer ist. Das Verbindungselement gleicht schadfrei den Dehnungsunterschied sogar bei sehr großen Umdrehungsgeschwindigkeiten aus, sodass die Belastbarkeit der Magneteinheit nicht durch die größere Dehnung des Rotors im Betrieb bei mehr als 24.000 Umdrehungen pro Minute teilweise wieder geschwächt wird. In einer Ausführungsform ist das Verbindungselement dazu als Sicke, Nabe, Speiche oder elastische Schicht ausgeführt. Hierbei sind besonders Sicken und Nabe für einen guten Rundlauf des Rotors geeignet.

Die Erfindung betrifft des Weiteren ein Verfahren zur Herstellung einer erfindungsgemäßen Magneteinheit geeignet als Außenläufer für eine Motor-Generator-Einheit, vorzugsweise für Schwungräder mit hohen Betriebs-Umdrehungsgeschwindigkeiten, umfassend die Schritte:
- Bereitstellen eines Halterings aus einem Faserverbundmaterial mit einer einer Mittelachse des Halterings zugewandten Innenseite;
- zumindest teilweises Aufbringen einer ersten Kleberschicht auf die Innenseite mit einer ersten Dicke;
- Befestigen eines Verbindungsblechs aus einem lastwechselfesten Material mittels der ersten Kleberschicht umlaufend auf der Innenseite, das eine Vielzahl an axial ausgerichteten Schlitzen umfasst, die Zwischenräume im Verbindungsblech bilden und dieses so in eine Vielzahl an axial ausgerichteten Blechstreifen unterteilen, wobei jeweils benachbarte Blechstreifen über Verbindungsstege zumindest zunächst miteinander verbunden sind;
- zumindest teilweises Aufbringen einer zweiten Kleberschicht auf das Verbindungsblech mit einer zweiten Dicke; und
- Befestigen einer Vielzahl an zumindest magnetisierbaren Magnetsegmenten nebeneinander mittels der zweiten Kleberschicht in Kontakt zueinander in einer umlaufenden Anordnung auf dem Verbindungsblech, wobei die jeweiligen Breiten der Blechstreifen und der Magnetsegmente in umlaufender Richtung der Innenseite so aufeinander angepasst sind, dass beim Befestigen jedes Magnetsegment nur einzeln auf jeweils einem der Blechstreifen aufgeklebt wird.
Dadurch wir der Betrieb von Schwungrädern mit sehr robusten lastwechselfesten Motor-Generator-Einheiten, die unter hohen Rotationsgeschwindigkeiten langzeitig mit hoher Leistung und hohem Wirkungsgrad betrieben werden können, ermöglicht, wobei die Magneteinheiten sogar 10⁶ Lastwechsel zwischen 0 - 500Hz aushalten.

In einer Ausführungsform des Verfahrens sind die Magnetsegmente entweder bereits vor dem Befestigen so magnetisiert, dass die Magnetsegmente nach ihrer Befestigung eine Mehrpolanordnung oder eine Halbach-Anordnung darstellen oder die noch nicht magnetisierten Magnetsegmente werden nach ihrer Befestigung mittels eines geeigneten Magnetisierungswerkzeugs zu einer Mehrpolanordnung oder einer Halbach-Anordnung aufmagnetisiert. Diese Magnetisierungen ermöglichen besonders effiziente Motor-Generator-Einheiten. Ein nachträgliches Aufmagnetisieren erleichtert die Montage der Magnetsegmente auf dem Verbindungsblech. Eine Verwendung von bereits magnetisierten Magnetsegmenten erhöht zwar den Montageaufwand, erspart jedoch ein zusätzliches Magnetisierungswerkzeug, was je nach Ausführungsform des Rotors eventuell nur mit Aufwand verwendbar ist.

### Kurze Beschreibung der Abbildungen

Diese und andere Aspekte der Erfindung werden im Detail in den Abbildungen wie folgt gezeigt:
- Fig.1:: eine Ausführungsform der erfindungsgemäßen Magneteinheit in Draufsicht aus axialer Richtung;
- Fig.2:: eine Ausführungsform des Verbindungsblechs in der erfindungsgemäßen Magneteinheit in Draufsicht in radialer Richtung;
- Fig.3:: eine trapezförmige Ausführungsform des Magnetsegments;
- Fig.4:: eine weitere Ausführungsform der erfindungsgemäßen Magneteinheit als Ausschnitt der Ansicht von Fig.1;
- Fig.5:: eine alternative Ausführungsform der erfindungsgemäßen Magneteinheit als Ausschnitt der Ansicht von Fig.1;
- Fig.6:: eine Ausführungsform der ersten Kleberschicht in der erfindungsgemäßen Magneteinheit entlang Schnittebene S aus Fig.2;
- Fig.7:: eine weitere Ausführungsform der ersten und zweiten Kleberschichten in der erfindungsgemäßen Magneteinheit mit dazwischen eingebettetem Verbindungsblech entlang Schnittebene S aus Fig.2;
- Fig.8:: eine Ausführungsform des Verbindungsblechs gemäß Fig.2 mit darauf angeordneten Drähten als Abstandshalter;
- Fig.9:: eine Ausführungsform der erfindungsgemäßen Schwungradeinheit im seitlichen Schnitt;
- Fig.10:: eine Ausführungsform eines erfindungsgemäßen Verfahrens.

### Detaillierte Beschreibung der Ausführungsbeispiele

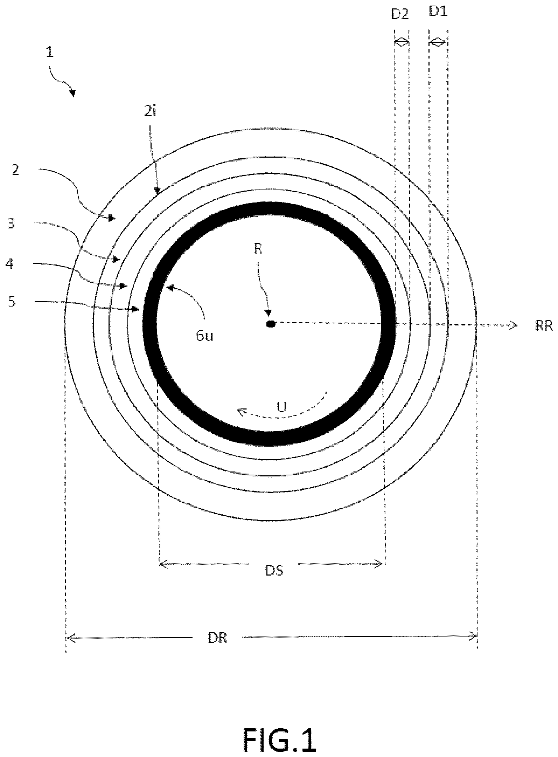

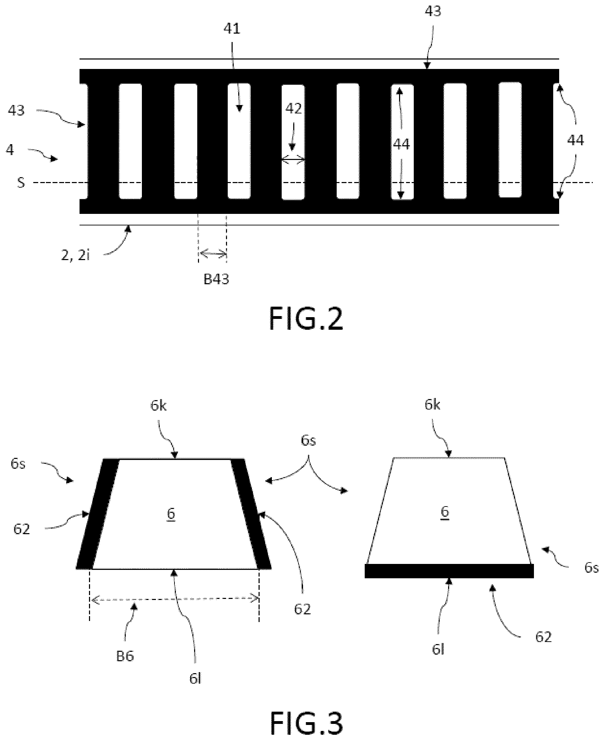

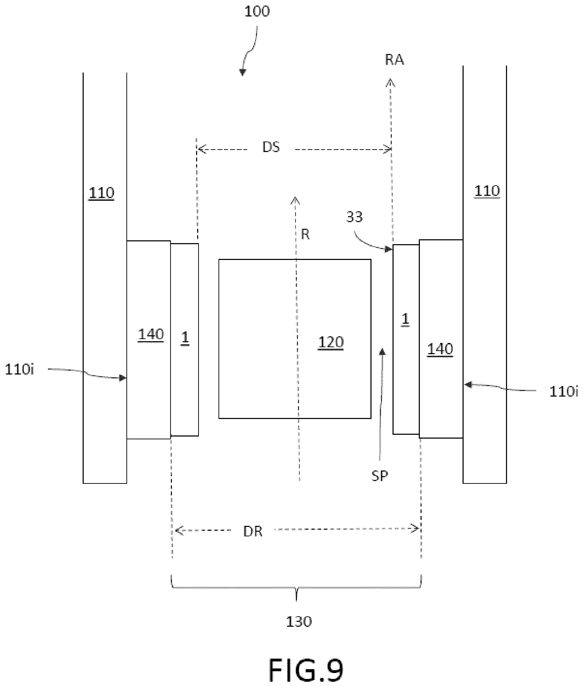

Fig.1 zeigt eine Ausführungsform der erfindungsgemäßen Magneteinheit 1 in Draufsicht aus axialer Richtung RA als Außenläufer für eine Motor-Generator-Einheit 130 für Schwungradeinheiten 100 mit hohen Betriebs-Umdrehungsgeschwindigkeiten (siehe auch Fig.9) umfassend einen Haltering 2 aus einem Faserverbundmaterial mit einer einer Mittelachse R des Halterings 2 zugewandten Innenseite 2i, die in dieser Ausführungsform senkrecht zur radialer Richtung RR ausgerichtet ist und ein die Innenseite 2i in Umlaufrichtung U umlaufendes Verbindungsblech 4 aus einem lastwechselfesten Material, das mittels einer geeigneten ersten Kleberschicht 3 mit einer ersten Dicke D1 auf der Innenseite befestigt ist. Der detaillierte Aufbau des Verbindungsblechs 4 ist in Fig.2 dargestellt. Auf dem Verbindungsblech 4 sind eine Vielzahl an zumindest magnetisierbaren Magnetsegmenten 6 in einer umlaufenden Anordnung 6u, die mittels einer zweiten Kleberschicht 5 mit einer zweiten Dicke D2 auf dem Verbindungsblech 4 befestigt sind. Der Innendurchmesser DS der Magneteinheit 1 ist auf die Dimensionen des hier nicht gezeigten Stators 130 angepasst, wobei die Spaltbreite zwischen der Anordnung 6u der Magnetsegmente 6 und der Oberfläche des Stators für einen effektiven Betrieb der Motor-Generator-Einheit möglichst klein ist. Vorzugsweise umfassen die erste und die zweite Kleberschicht 3, 5 jeweils einen Klebstoff aus der Familie der Methylacrylate. Das Material des Halterings 2 ist ein Faserverbundwerkstoff, vorzugsweise kohlenstofffaserverstärkter Kunststoff (CFK oder PFK). Das Verbindungsblech 4 kann beispielsweise aus Aluminium, vorzugsweise Aluminium 7075, gefertigt sein. Die Dicke des Verbindungsblechs 4 liegt vorzugsweise in der Größenordnung von 1mm. Die Magnetsegmente können in radialer Richtung RR eine Ausdehnung von 5 mm besitzen.

Fig.2 zeigt eine Ausführungsform des Verbindungsblechs 4 in der erfindungsgemäßen Magneteinheit 1 als Ausschnitt in Draufsicht in radialer Richtung RR. Das Verbindungsblech 4 ist mittels einer geeigneten ersten Kleberschicht 3 (hier nicht gezeigt) auf der Innenseite 2i des Halterings 2 befestigt. Das Verbindungsblech 4 umfasst eine Vielzahl an axial ausgerichteten, hier parallelen Schlitzen 41, die Zwischenräume 42 im Verbindungsblech 4 bilden und so das Verbindungsblech 4 in eine Vielzahl an axial ausgerichteten Blechstreifen 43 mit einer jeweiligen Breite B43 unterteilen. Die jeweils benachbarten Blechstreifen 43 sind hier noch über Verbindungsstege 44 am jeweils axialen oberen und unteren Rand des Verbindungsblechs 4 miteinander verbunden, damit eine Vielzahl an zumindest magnetisierbaren Magnetsegmenten 6 in einer umlaufenden Anordnung 6u mittels einer zweiten Kleberschicht 5 (hier noch nicht vorhanden) auf dem Verbindungsblech leicht befestigt werden kann. Die Zwischenräume 43 können dabei zumindest teilweise mit einem Material der ersten und/oder zweiten Kleberschicht 3, 5 gefüllt werden. Die Verbindungsstege 44 sind dabei als Sollbruchstelle zwischen den Blechstreifen 43 ausgeführt, damit diese während eines Anfangsbetriebs der Schwungradeinheit 100 gewünscht brechen, um eine Spannungsübertragung zwischen den Blechstreifen 43 im Betrieb zu verhindern oder zumindest stark abzuschwächen.

Fig.3 zeigt eine trapezförmige Ausführungsform des Magnetsegments 6. Hierbei besitzen die Magnetsegmente 6 in axialer Richtung RA (siehe Fig. 9) einen trapezförmigen Querschnitt mit einer kurzen Seite 6k und einer dazu parallelen langen Seite 6l und zwischen den kurzen und langen Seiten befindliche Seitenflächen 6s. Die parallelen kurzen und langen Seiten 6k, 6l stellen die Grundseiten des Trapezes dar. Hierbei können in axialer Richtung RA auch mehrere Magnete hintereinander (senkrecht zur Bildebene) ein gemeinsames Magnetsegment 6 bilden, um ein ungünstiges Längen-Querschnittsverhältnis der einzelnen Magnete im jeweiligen Magnetsegment 6 zu vermeiden. Die Breite B6 der Magnetsegmente 6 in umlaufender Richtung U entspricht der durchschnittlichen Breite bei trapezförmigen Querschnitt, hier die Hälfte der Summe der Längen der kurzen und langen Seiten 6k, 6l. Die Magnetsegmente 6 sind in den hier gezeigten Ausführungsformen teilweise mit einer Kontaktschicht 62 (schwarz dargestellt) beschichtet. Die Kontaktschicht 62 ist in der linken Abbildung auf den Seitenflächen 6s der Magnetsegmente 6, die mit benachbarten Magnetsegmenten 6 in Kontakt stehen, aufgebracht. In der rechten Abbildung (alternative Ausführungsform) ist diese Kontaktschicht 62 auf den Flächen der Magnetsegmente 6 in Kontakt mit der Kleberschicht 5 als Passivierungsschicht aufgebracht. Die Kontaktschicht 62 kann die Magnetsegmente 6 in anderen Ausführungsformen auch vollständig einhüllen. Vorzugsweise besteht die Kontaktschicht 62 aus Ni, Cu oder Sn oder aus mehreren Schichten dieser Materialien oder aus einem Material geeignet zur chemischen Passivierung wie beispielsweise Cr oder Cr/Ni. Vorzugsweise besitzt die Kontaktschicht 62 eine Dicke von 5 - 12µm, um die Oberflächen der Magnetsegmente 6 zu glätten beziehungsweise zu passivieren, was unter anderem die Oberflächenkerbwirkung der Magnetsegmente 6 reduziert, und/oder die Klebeigenschaften der Magnetsegmente 6 verbessert, was dann zu einer höheren Belastbarkeit der Magneteinheit 1 im Betrieb führt.

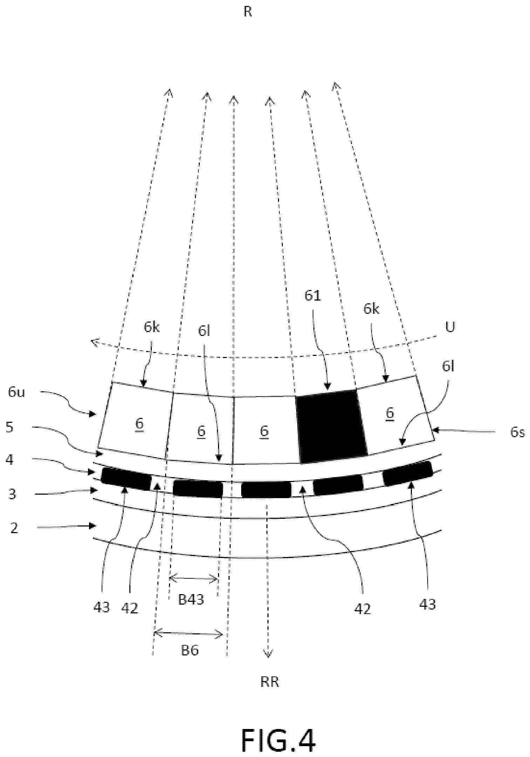

Fig.4 zeigt eine weitere Ausführungsform der erfindungsgemäßen Magneteinheit 1 als Ausschnitt der Ansicht von Fig.1. Die Magnetsegmente 6 sind in der umlaufenden Anordnung 6u jeweils mit der langen Seite 6l zu dem Verbindungsblech 4 in Kontakt zueinander angeordnet, wobei das Verhältnis zwischen den kurzen und langen Seiten 6k, 6l der jeweiligen Magnetsegmente 6 so angepasst ist, dass Verlängerungen (gestrichelte Pfeile) der jeweiligen Seitenflächen 6s der Magnetsegmente 6 in der Mittelachse R des Halterings 2 (beziehungsweise in der Rotationsachse R des Rotors 110 der Schwungradeinheit 100) zusammenlaufen. Dadurch ist die Trapezform nahezu quadratisch, was auch Materialspannungen innerhalb eines Magnetsegments 6 zu reduzieren hilft. Durch die Trapezform wird zum einen ein maximaler magnetischer Fluss durch die Magnetanordnung 6u realisiert und zum anderen verhindert der Formschluss ein Herausfallen der Magnetsegmente 6 selbst bei einem eventuellen Versagen der Kleberschicht 5.

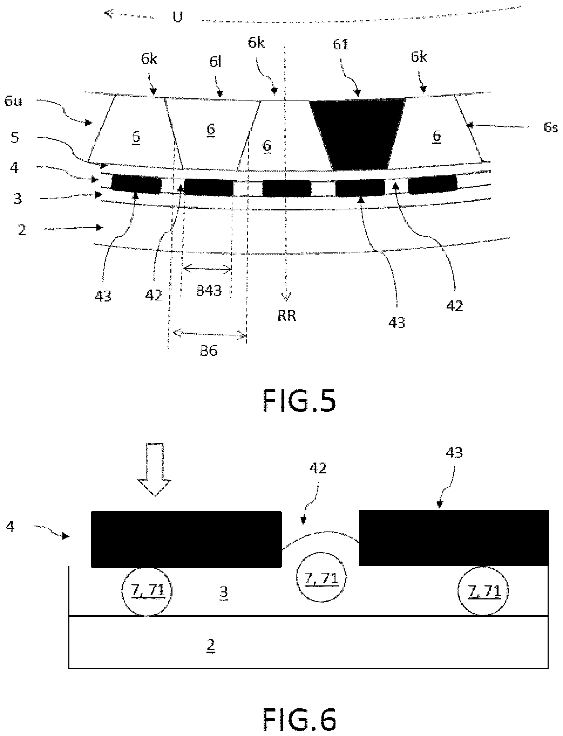

Fig.5 zeigt eine alternative Ausführungsform der erfindungsgemäßen Magneteinheit 1 als Ausschnitt der Ansicht von Fig.1. Hier sind im Gegensatz zu Fig.4 die Magnetsegmente 6 abwechselnd mit der kurzen und langen Seite 6k, 6l zu dem Verbindungsblech 4 in Kontakt zueinander angeordnet. Hierbei ist die Trapezform der Magnetsegmente 6, die mit der kurzen Seite 6k Richtung Kleberschicht 5 angeordnet sind, unterschiedlich zu der Form der Magnetsegmente 6, die mit der langen Seite 6l Richtung Kleberschicht 5 angeordnet sind, wobei die Formen so angepasst sind, dass die Magnetsegmente nebeneinander in einer Kreisform über der Innenseite 2i des Halterings angeordnet werden können. Bei den Trapezformen solcher gegengleich angeordneter Magnetsegmente 2 beträgt beispielsweise der Winkel zwischen der Seitenfläche 6s und der langen Seite 6l von 86,25° beziehungsweise 83,75°.

Diese Winkel sind dabei so gewählt, dass die gegengleich angeordneten Magnetsegmente 6 nach dem Verpressen selbsthemmend gegen ein Verrutschen angeordnet sind. Durch die Trapezform wird auch hier ein maximaler magnetischer Fluss durch die Magnetanordnung 6u realisiert. Diese Form ist sinnvoll, wenn die Magnetsegmente in Umfangsrichtung verpresst werden sollen.

Sowohl in Fig.4 als auch in Fig.5 sind die Blechstreifen 43 des Verbindungsblechs 4 als schwarze Abschnitte im Schichtaufbau aus Haltering 2, erster Kleberschicht 3, Verbindungsblech 4, zweiter Kleberschicht 5 und umlaufender Anordnung 6u der Magnetsegmente 6 dargestellt. Die jeweiligen Breiten B43, B6 der Blechstreifen 43 und der Magnetsegmente 6 sind so aufeinander angepasst, dass jedes Magnetsegment 6 nur auf einem jeweils eigenen Blechstreifen 43 aufgeklebt ist und die Vielzahl an Magnetsegmenten 6 nebeneinander in der Magneteinheit 1 dennoch in Kontakt zueinander angeordnet werden können, wie in Fig.4 und 5 gezeigt. Die Anordnung der Magnetsegmente 6 auf dem Verbindungsblech 4 umfasst in diesen Ausschnitten jeweils ein Ausgleichsstück 61, das Fertigungstoleranzen der Magnetsegmente 6 für eine umlaufende Anordnung 6u sich berührender benachbarter Magnetsegmente 6 ausgleichen soll. Dabei kann das Ausgleichsstück 61 zusätzlich ein Befestigungsmittel für eine Führungsmöglichkeit umfassen (hier nicht gezeigt). Hierbei können in axialer Richtung RA auch mehrere Magnete hintereinander ein gemeinsames Magnetsegment 6 bilden, um ein ungünstiges Längen-Querschnittsverhältnis der einzelnen Magnete zu vermeiden.

Fig.6 zeigt eine Ausführungsform der ersten Kleberschicht 3 in der erfindungsgemäßen Magneteinheit 1 entlang der Schnittebene S aus Fig.2. Der Zwischenraum 43 ist hier teilweise mit dem Material der ersten Kleberschicht 3 gefüllt, weil dahinein das überzählige Klebermaterial beim Aufdrücken des Verbindungsblechs 4 in Pfeilrichtung auf die erste Kleberschicht 3 verdrängt wird. Die erste Kleberschicht 3 umfasst zusätzlich Abstandshalter 7, die hier als Kugeln 71, beispielsweise Glaskugeln, ausgeführt sind und deren Ausdehnung beziehungsweise Durchmesser D7 in radialer Richtung der gewünschten Dicke D1 der ersten Kleberschicht 3 entspricht, indem die Kugeln sowohl mit dem Haltering als auch mit dem Verbindungsblech 4 mittels Aufdrücken des Verbindungsblechs 4 in Kontakt gebracht werden und somit die Dicke D1 der ersten Kleberschicht 3 definieren. Die Kugeln können dabei einen Durchmesser D7 zwischen 100 - 300µm, vorzugsweise zwischen 150 - 250µm, besitzen.

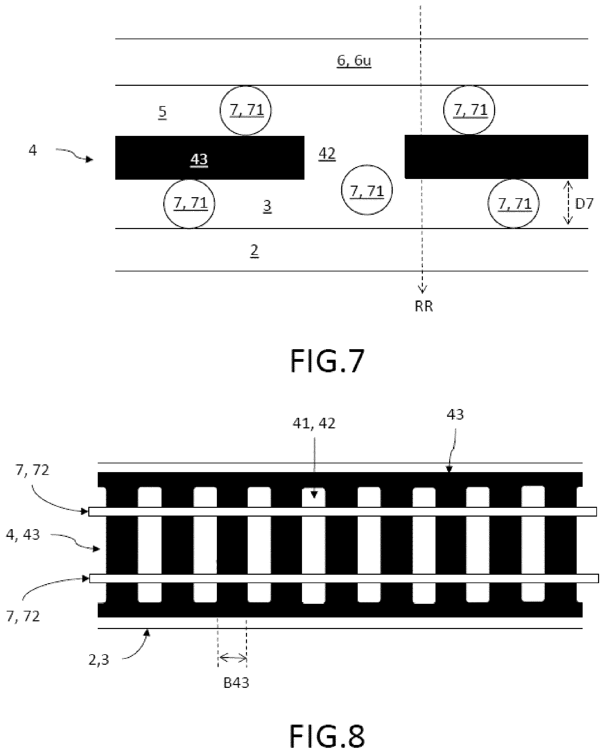

Fig.7 zeigt eine weitere Ausführungsform der ersten und zweiten Kleberschichten 3, 5 in der erfindungsgemäßen Magneteinheit 1 mit dazwischen eingebettetem Verbindungsblech 4 entlang der Schnittebene S aus Fig.2. In dieser Ausführungsform ist der gesamte Zwischenraum 42 zwischen den Blechstreifen 43 mit Material der ersten und/oder zweiten Kleberschicht 3, 5 gefüllt. Hier umfassen sowohl die erste als auch die zweite Kleberschicht 3, 5 mehrere Kugeln 71 als Abstandshalter 7, deren Ausdehnung D7 in radialer Richtung der jeweiligen gewünschten Dicke D1, D2 sowohl der ersten als auch der zweiten Kleberschicht 3, 5 entsprechen. Zusätzlich zu der bereits in Fig.5 ausgeführten Anordnung werden die Kugeln 71 der zweiten Kleberschicht 5 in Kontakt mit dem Verbindungsblech 4 und den Magnetsegmente 6 der umlaufenden Anordnung 6u gebracht, so dass hier zusätzlich zur ersten Dicke D1 der ersten Kleberschicht 3 auch die zweite Dicke D2 der zweiten Kleberschicht 5 auf gleiche Weise definiert wird. Der Zwischenraum 43 ist hier vollständig mit dem Material der ersten und zweiten Kleberschichten 3, 5 gefüllt, weil dahinein auch das überzählige Klebermaterial der zweiten Kleberschicht 5 beim Aufdrücken der Magnetsegmente 6 auf die zweite Kleberschicht 5 verdrängt wird. Die Kugeln in der zweiten Kleberschicht 5 können dabei ebenfalls einen Durchmesser D7 zwischen 100 - 300µm, vorzugsweise zwischen 150 - 250µm, besitzen.

Fig.8 zeigt eine Ausführungsform des Verbindungsblechs 4 gemäß Fig.2 mit darauf angeordneten Drähten 72 als Abstandshalter 7. Das Verbindungsblech 4 mag hierbei je nach Ausführungsform beispielsweise wie in Fig.6 gezeigt auf dem Haltering 2 befestigt sein. In der hier gezeigten Ausführungsform sind die Abstandshalter in der zweiten Kleberschicht 5 aber abweichend von Fig.7 als zwei Drähte 72 mit geeigneten Durchmessern D7 ausgeführt, die zumindest teilweise umlaufend auf dem Verbindungsblech 4 vor dem Aufbringen der zweiten Kleberschicht 5 angeordnet werden. Die Drähte in der zweiten Kleberschicht 5 können dabei ebenfalls einen Durchmesser D7 zwischen 100 - 300µm, vorzugsweise zwischen 150 - 250µm, besitzen. In einer hier nicht gezeigten Ausführungsform können solche Drähte natürlich auch als Abstandshalter alternativ zu Kugeln auch in der ersten Kleberschicht 3 verwendet werden. Die Ausführungsform mit Drähten 72 verhindert, dass Abstandshalter 7 zwischen benachbarte Magnetsegmente 6 bei deren Anordnung gelangen können.

Fig.9 zeigt eine Ausführungsform der erfindungsgemäßen Schwungradeinheit 100 im seitlichen Schnitt umfassend ein zumindest teilweise innen hohlen Rotor 110 aus einem Faserverbundmaterial mit einer Innenseite 110i zugewandt zur Drehachse R des Rotors 110 und eine auf der Innenseite 110i des Rotors 110 geeignet angeordnete erfindungsgemäße Magneteinheit 1, die zusammen mit einem Stator 120 eine Motor-Generator-Einheit 130 zum Rotieren des Rotors 110 bildet (siehe Klammer 130), wobei die Magneteinheit 1 mit einem Außendurchmesser DR auf der Innenseite 110i des Rotors 110 mittels ein oder mehrerer flexibler Verbindungselemente 140 so fest montiert ist, dass die Magneteinheit 1 im Betrieb der Schwungradeinheit den Stator 120 umläuft. Die Verbindungselemente vermitteln über ihre Flexibilität die unterschiedlichen Dehnungen von Rotor 110 und Magnetring 1, wobei sich der Rotor 110 im Betrieb üblicherweise mehr dehnt als der Magnetring 1. Das hier nicht weiter im Detail gezeigte Verbindungselement 140 kann dabei als Sicke, Nabe, Speiche oder elastische Schicht ausgeführt sein. Die elastische Schicht beispielsweise vermittelt die unterschiedlichen Dehnungen über ihre Materialeigenschaft, während die Sicke eine Elastizität über ihre Geometrie bereitstellt, beispielsweise mittels einer ziehharmonika-ähnlichen dehnfähigen Struktur. Eine Nabe oder eine Speiche könnten über Verformung die unterschiedlichen Dehnungen vermitteln, wobei diese beiden Ausführungsformen zudem einen guten Rundlauf ermöglichen.

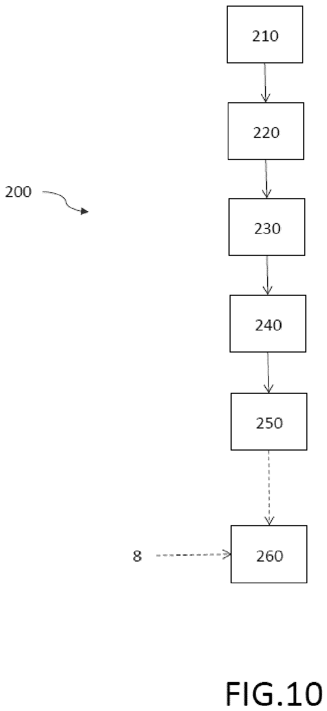

Fig.10 zeigt eine Ausführungsform eines erfindungsgemäßen Verfahrens 200 zur Herstellung der erfindungsgemäßen Magneteinheit umfassend die Schritte des Bereitstellens 210 eines Halterings 2 aus einem Faserverbundmaterial mit einer einer Mittelachse R des Halterings 2 zugewandten Innenseite 2i; des zumindest teilweisen Aufbringens 220 einer ersten Kleberschicht 3 auf die Innenseite 2i mit einer ersten Dicke D1; des Befestigens 230 eines Verbindungsblechs 4 aus einem lastwechselfesten Material mittels der ersten Kleberschicht 3 umlaufend auf der Innenseite 2i, das eine Vielzahl an axial ausgerichteten Schlitzen 41 umfasst, die Zwischenräume 42 im Verbindungsblech 4 bilden und dieses so in eine Vielzahl an axial ausgerichteten Blechstreifen 43 unterteilen, wobei jeweils benachbarte Blechstreifen 43 über Verbindungsstege 44 zumindest zunächst miteinander verbunden sind; des zumindest teilweisen Aufbringens 240 einer zweiten Kleberschicht 5 auf das Verbindungsblech 4 mit einer zweiten Dicke D2; und des Befestigens 250 einer Vielzahl an zumindest magnetisierbaren Magnetsegmenten 6 mittels der zweiten Kleberschicht 5 in Kontakt zueinander nebeneinander in einer umlaufenden Anordnung 6u auf dem Verbindungsblech 4, wobei die jeweiligen Breiten B43, B6 der Blechstreifen 43 und der Magnetsegmente 6 in umlaufender Richtung U der Innenseite 2i so aufeinander angepasst sind, dass beim Befestigen jedes Magnetsegment 6 nur auf einem jeweils eigenen der Blechstreifen 43 aufgeklebt wird. Hierbei können die Magnetsegmente 6 bereits vor dem Befestigen 250 so magnetisiert sein, dass die Magnetsegmente 6 nach ihrer Befestigung 250 eine Mehrpolanordnung oder eine Halbach-Anordnung darstellen. Alternativ können die noch nicht magnetisierten Magnetsegmente 6 nach ihrer Befestigung 250 mittels eines geeigneten Magnetisierungswerkzeugs 8 zu einer Mehrpolanordnung oder eine Halbach-Anordnung aufmagnetisiert 260 werden, wie hier gestrichelt dargestellt ist.

Die hier gezeigten Ausführungsbeispiele stellen nur Beispiele für die vorliegende Erfindung dar und dürfen daher nicht einschränkend verstanden werden. Alternativen durch den Fachmann in Erwägung gezogene Ausführungsformen sind gleichermaßen vom Schutzbereich der vorliegenden Erfindung umfasst.

### Liste der Bezugszeichen

- 1: Magneteinheit
- 2: Haltering
- 2i: Innenseite des Halterings
- 3: erste Kleberschicht
- 4: Verbindungsblech
- 41: Schlitze im Verbindungsblech
- 42: Zwischenraum zwischen den Schlitzen
- 43: Blechstreifen im Verbindungsblech
- 44: Verbindungssteg
- 5: zweite Kleberschicht
- 6: Magnetsegment
- 6u: umlaufende Anordnung von Magnetsegmenten
- 6k: kurze Seite des trapezförmigen Querschnitts des Magnetsegments
- 6l: lange Seite des trapezförmigen Querschnitts des Magnetsegments
- 6s: Seitenfläche des Magnetsegments zugewandt zum benachbarten Magnetsegment
- 61: Ausgleichsstück
- 62: Kontaktschicht auf dem Magnetsegment
- 7: Abstandshalter
- 71: Kugeln
- 72: Drähte
- 8: Magnetisierungswerkzeug
- 100: Schwungradeinheit
- 110: Rotor
- 110i: Innenseite des Rotors
- 120: Stator
- 130: Motor-Generator-Einheit
- 140: Verbindungselement
- 200: Verfahren zur Herstellung einer Magneteinheit
- 210: Bereitstellen eines Haltering mit Innenseite
- 220: Aufbringen einer ersten Kleberschicht auf die Innenseite
- 230: Befestigen eines Verbindungsblechs mittels der ersten Kleberschicht
- 240: Aufbringen einer zweiten Kleberschicht auf das Verbindungsblech
- 250: Befestigen einer Vielzahl an Magnetsegmenten mittels der zweiten Kleberschicht
- 260: Aufmagnetisieren der Magnetsegmente mit dem Magnetisierungswerkzeug

- B6: Breite der Magnetsegmente in umlaufender Richtung der Innenfläche 2i
- B43: Breite der Blechstreifen in umlaufender Richtung der Innenfläche 2i
- D1: erste Dicke der ersten Kleberschicht
- D2: zweite Dicke der zweiten Kleberschicht
- D7: Durchmesser der Abstandshalter in radialer Richtung
- DR: Außendurchmesser Magneteinheit
- DS: Innendurchmesser Magneteinheit
- S: Schnittebene durch die Magneteinheit senkrecht zum Schichtaufbau
- SP: Spalt zwischen Magnetanordnung und Stator
- R: Mittelachse des Halterings, Drehachse der Magneteinheit / Rotors
- RA: axiale Richtung zur Drehachse
- RR: radiale Richtung von der Mittelachse / Drehachse
- U: umlaufende Richtung

## Patentansprüche

1. Eine Magneteinheit (1) geeignet als Außenläufer für eine Motor-Generator-Einheit (10), vorzugsweise für Schwungradeinheiten (100) mit hohen Betriebs-Umdrehungsgeschwindigkeiten, umfassend einen Haltering (2) aus einem Faserverbundmaterial mit einer einer Mittelachse (R) des Halterings (2) zugewandten Innenseite (2i), auf der ein die Innenseite (2i) umlaufendes Verbindungsblech (4) aus einem lastwechselfesten Material mittels einer geeigneten ersten Kleberschicht (3) mit einer ersten Dicke (D1) befestigt ist, das eine Vielzahl an axial ausgerichteten Schlitzen (41) umfasst, die Zwischenräume (42) im Verbindungsblech (4) bilden und dieses Verbindungsblech so in eine Vielzahl an axial ausgerichteten Blechstreifen (43) unterteilen, wobei jeweils benachbarte Blechstreifen (43) zumindest zunächst über Verbindungsstege (44) miteinander verbunden sind, und auf dem Verbindungsblech (4) eine Vielzahl an zumindest magnetisierbaren Magnetsegmenten (6) in einer umlaufenden Anordnung (6u) mittels einer zweiten Kleberschicht (5) mit einer zweiten Dicke (D2) befestigt sind, wobei die jeweiligen Breiten (B43, B6) der Blechstreifen (43) und der Magnetsegmente (6) in umlaufender Richtung (U) der Innenseite (2i) des Halterings so aufeinander angepasst sind, dass jedes Magnetsegment (6) nur auf einem jeweils eigenen Blechstreifen (43) aufgeklebt ist und die Vielzahl an Magnetsegmenten (6) in der Magneteinheit (1) in Kontakt zueinander nebeneinander angeordnet sind.

2. Die Magneteinheit (1) nach Anspruch 1,
**dadurch gekennzeichnet,**
**dass** zumindest einige der Zwischenräume (43) zumindest teilweise mit einem Material der ersten und/oder zweiten Kleberschicht (3, 5) gefüllt sind.

3. Die Magneteinheit (1) nach Anspruch 1 oder 2,
**dadurch gekennzeichnet,**
**dass** die erste und/oder zweite Kleberschicht (3, 5) ein oder mehrere geeignete Abstandshalter (7) umfasst, deren Ausdehnung (D7) in radialer Richtung der jeweiligen gewünschten Dicke (D1, D2) der ersten und/oder zweiten Kleberschicht (3, 5) entspricht und über Kontakt mit Haltering (2) und Verbindungsblech (4) beziehungsweise mit Verbindungsblech (4) und Magnetsegment (6) die jeweiligen ersten und/oder zweiten Dicken (D1, D2) der ersten und/oder zweiten Kleberschicht (3, 5) definiert.

4. Die Magneteinheit (1) nach Anspruch 3,
**dadurch gekennzeichnet,**
**dass** die Abstandshalter (7) Kugeln (71), vorzugsweise Glaskugeln, mit geeigneten Durchmessern (D7) sind, die zusammen mit der ersten und/oder zweiten Klebeschicht (3, 5) aufgebracht werden.

5. Die Magneteinheit (1) nach Anspruch 3,
**dadurch gekennzeichnet,**
**dass** die Abstandshalter (7) ein oder mehrere Drähte (72) mit geeigneten Durchmessern (D7) sind, die zumindest teilweise umlaufend auf der Innenseite (2i) beziehungsweise zumindest teilweise umlaufend auf dem Verbindungsblech (4) vor dem Aufbringen der ersten beziehungsweise zweiten Kleberschicht (3, 5) angeordnet sind.

6. Die Magneteinheit (1) nach Anspruch 4 oder 5,
**dadurch gekennzeichnet,**
**dass** die geeigneten Durchmesser (D7) zwischen 100 - 300µm, vorzugsweise zwischen 150 - 250µm, betragen.

7. Die Magneteinheit (1) nach einem der voranstehenden Ansprüche,
**dadurch gekennzeichnet,**
**dass** die erste und die zweite Kleberschicht (3, 5) jeweils einen Klebstoff aus der Familie der Methylacrylate umfasst.

8. Die Magneteinheit (1) nach einem der voranstehenden Ansprüche,
**dadurch gekennzeichnet,**
**dass** die Verbindungsstege (44) als Sollbruchstelle zwischen den Blechstreifen (43) geeignet ausgeführt sind, damit diese während eines Anfangsbetriebs der Schwungradeinheit (100) brechen.

9. Die Magneteinheit (1) nach einem der voranstehenden Ansprüche,
**dadurch gekennzeichnet,**
**dass** die Anordnung der Magnetsegmente (6) auf dem Verbindungsblech (4) mindestens ein Ausgleichsstück (61) umfasst, vorzugsweise umfasst mindestens ein Ausgleichsstück (61) ein Befestigungsmittel für eine Führungsmöglichkeit.

10. Die Magneteinheit (1) nach einem der voranstehenden Ansprüche,
**dadurch gekennzeichnet,**
**dass** die Magnetsegmente (6) in axialer Richtung (RA) einen trapezförmigen Querschnitt mit einer kurzen Seite (6k) und einer dazu parallelen langen Seite (6l) und zwischen den kurzen und langen Seiten befindliche Seitenflächen (6s) besitzen.

11. Die Magneteinheit (1) nach Anspruch 10,
**dadurch gekennzeichnet,**
**dass** die Magnetsegmente (6) entweder abwechselnd mit der kurzen und langen Seite (6k, 6l) zu dem Verbindungsblech (4) in Kontakt zueinander angeordnet sind oder dass die Magnetsegmente (6) jeweils mit der langen Seite (6l) zu dem Verbindungsblech (4) in Kontakt zueinander angeordnet sind, wobei dann das Verhältnis zwischen den kurzen und langen Seiten (6k, 6l) der jeweiligen Magnetsegmente (6) so angepasst ist, dass eine Verlängerungen der jeweiligen Seitenflächen (6s) der Magnetsegmente (6) in der Mittelachse (R) des Halterings (2) zusammenlaufen.

12. Die Magneteinheit (1) nach Anspruch 10 oder 11,
**dadurch gekennzeichnet,**
**dass** die Magnetsegmente (6) zumindest auf einer Seite (6s) mit einer Kontaktschicht (62) beschichtet sind, vorzugsweise besteht die Kontaktschicht (62) aus Ni, Cu oder Sn oder aus mehreren Schichten dieser Materialien oder aus einem Material geeignet zur chemischen Passivierung.

13. Eine Schwungradeinheit (100) umfassend einen zumindest teilweise innen hohlen Rotor (110) aus einem Faserverbundmaterial mit einer Innenseite (110i) und eine auf der Innenseite (110i) des Rotors (110) geeignet angeordnete Magneteinheit (1) nach Anspruch 1, die zusammen mit einem Stator (120) eine Motor-Generator-Einheit (130) zum Rotieren des Rotors (110) bildet, wobei die Magneteinheit (1) auf der Innenseite (110i) des Rotors (110) so montiert ist, dass die Magneteinheit (1) im Betrieb der Schwungradeinheit den Stator (120) umläuft.

14. Die Schwungradeinheit (100) nach Anspruch 13,
**dadurch gekennzeichnet,**
**dass** der Haltering (2) der Magneteinheit (1) über ein oder mehrere flexible Verbindungselemente (140) mit der Innenseite (110i) des Rotors (110) verbunden ist, vorzugsweise ist das Verbindungselement (140) als Sicke, Nabe, Speiche oder elastische Schicht ausgeführt.

15. Ein Verfahren (200) zur Herstellung einer Magneteinheit (1) geeignet als Außenläufer für eine Motor-Generator-Einheit (130) nach Anspruch 1, vorzugsweise für Schwungräder (100) mit hohen Betriebs-Umdrehungsgeschwindigkeiten, umfassend die Schritte:
- Bereitstellen (210) eines Halterings (2) aus einem Faserverbundmaterial mit einer einer Mittelachse (R) des Halterings (2) zugewandten Innenseite (2i);
- zumindest teilweises Aufbringen (220) einer ersten Kleberschicht (3) auf die Innenseite (2i) mit einer ersten Dicke (D1);
- Befestigen (230) eines Verbindungsblechs (4) aus einem lastwechselfesten Material mittels der ersten Kleberschicht (3) umlaufend auf der Innenseite (2i), das eine Vielzahl an axial ausgerichteten Schlitzen (41) umfasst, die Zwischenräume (42) im Verbindungsblech (4) bilden und dieses so in eine Vielzahl an axial ausgerichteten Blechstreifen (43) unterteilen, wobei jeweils benachbarte Blechstreifen (43) über Verbindungsstege (44) zumindest zunächst miteinander verbunden sind;
- zumindest teilweises Aufbringen (240) einer zweiten Kleberschicht (5) auf das Verbindungsblech (4) mit einer zweiten Dicke (D2); und
- Befestigen (250) einer Vielzahl an zumindest magnetisierbaren Magnetsegmenten (6) nebeneinander mittels der zweiten Kleberschicht (5) in Kontakt zueinander in einer umlaufenden Anordnung (6u) auf dem Verbindungsblech (4), wobei die jeweiligen Breiten (B43, B6) der Blechstreifen (43) und der Magnetsegmente (6) in umlaufender Richtung (U) der Innenseite (2i) so aufeinander angepasst sind, dass beim Befestigen jedes Magnetsegment (6) nur einzeln auf jeweils einem der Blechstreifen (43) aufgeklebt wird.

16. Das Verfahren (200) nach Anspruch 15, wobei die Magnetsegmente (6) bereits vor dem Befestigen (250) so magnetisiert sind, dass die Magnetsegmente (6) nach ihrer Befestigung (250) eine Mehrpolanordnung oder eine Halbach-Anordnung darstellen oder die noch nicht magnetisierten Magnetsegmente (6) werden nach ihrer Befestigung (250) mittels eines geeigneten Magnetisierungswerkzeugs (8) zu einer Mehrpolanordnung oder eine Halbach-Anordnung aufmagnetisiert (260).

## Claims

1. A magnet unit (1) suitable as external rotor for a motor-generator unit (10), preferably for flywheel units (100) with high operating rotating speeds, comprising a retaining ring (2) made of a fibre composite material with an internal side (2i) that faces a central axis (R) of the retaining ring (2) and has a connecting panel (4) that is circumferential with respect to the internal side (2i) and is made of a load reversal-resistant material fastened on it by means of a suitable first adhesive layer (3) with a first thickness (D1), whereby the connecting panel comprises a multitude of axially-aligned slits (41) that form intervening spaces (42) in the connecting panel (4) and thus subdivide said connecting panel into a multitude of axially-aligned sheet metal strips (43), whereby neighbouring sheet metal strips (43) are initially connected to each other at least by means of connecting fins (44), and the connecting panel (4) has a multitude of magnet segments (6) that are at least magnetisable fastened to it in a circumferential arrangement (6u) by means of a second adhesive layer (5) with a second thickness (D2), whereby the respective widths (B43, B6) of the sheet metal strips (43) and of the magnet segments (6) in circumferential direction (U) of the internal side (2i) of the retaining ring are adapted to each other appropriately such that each magnet segment (6) is glued only to one own metal sheet strip (43) and the multitude of magnet segments (6) in the magnet unit (1) is arranged next to each other such as to be in contact with each other.

2. The magnet unit (1) according to claim 1,
**characterised in that**
at least some of the intervening spaces (43) are filled, at least partially, with a material of the first and/or second adhesive layer (3, 5).

3. The magnet unit (1) according to claim 1 or 2,
**characterised in that**
the first and/or second adhesive layer (3, 5) comprise(s) one or more suitable spacers (7) whose extension (D7) in radial direction corresponds to the respective desired thickness (D1, D2) of the first and/or second adhesive layer (3, 5) and defines the respective first and/or second thicknesses (D1, D2) of the first and/or second adhesive layer (3, 5) by means of the contact with the retaining ring (2) and connecting panel (4) or with the connecting panel (4) and the magnet segment (6).

4. The magnet unit (1) according to claim 3,
**characterised in that**
the spacers (7) are beads (71), preferably glass beads, with suitable diameters (D7) that are being applied together with the first and/or second adhesive layer (3, 5).

5. The magnet unit (1) according to claim 3,
**characterised in that**
the spacers (7) are one or more wires (72) with suitable diameters (D7) that are arranged, at least partially, such as to be circumferential on the internal side (2i) and/or are arranged, at least partially, such as to be circumferential on the connecting panel (4) before the application of the first and/or second adhesive layer (3, 5).

6. The magnet unit (1) according to claim 4 or 5,
**characterised in that**
the suitable diameters (D 7) are between 100 - 300 µm, preferably between 150 - 250 µm.

7. The magnet unit (1) according to any one of the preceding claims,
**characterised in that**
the first and the second adhesive layer (3, 5) each comprises an adhesive from the family of the methacrylates.

8. The magnet unit (1) according to any one of the preceding claims,
**characterised in that**
the connecting fins (44) are suitably designed as predetermined breakage sites between the sheet metal strips (43) such that these fracture during an initial operation of the flywheel unit (100).

9. The magnet unit (1) according to any one of the preceding claims,
**characterised in that**
the arrangement of the magnet segments (6) on the connecting panel (4) comprises at least one compensation piece (61), at least one compensation piece (61) preferably comprises a fastening means for a guiding option.

10. The magnet unit (1) according to any one of the preceding claims,
**characterised in that**
the magnet segments (6) possess, in axial direction (RA), a trapezoidal cross-section with a short side (6k) and, parallel to it, a long side (6l) and side surfaces (6s) that are situated between the short and long sides.

11. The magnet unit (1) according to claim 10,
**characterised in that**
the magnet segments (6) are arranged either alternatingly in contact with each other with the short and long side (6k, 6l) toward the connecting panel (4) or **in that** the magnet segments (6) each are arranged in contact with each other with the long side (6l) toward the connecting panel (4), such that the ratio between the short and long sides (6k, 6l) of the respective magnet segments (6) is then suitably adapted such that prolongations of the respective side surfaces (6s) of the magnet segments (6) converge in the central axis (R) of the retaining ring (2).

12. The magnet unit (1) according to claim 10 or 11,
**characterised in that**
the magnet segments (6) are coated with a contact layer (62), at least on one side (6s), the contact layer (62) preferably consists of Ni, Cu or Sn or of multiple layers of said materials or of a suitable material for chemical passivation.

13. A flywheel unit (100) comprising a rotor (110) that is at least partially hollow on the inside and is made of a fibre composite material and has an internal side (110i) and a magnet unit (1) according to claim 1 that is suitably arranged on the internal side (110i) of the rotor (110), which, together with a stator (120), form a motor-generator unit (130) for rotating the rotor (110), whereby the magnet unit (1) is appropriately mounted to the internal side (110i) of the rotor (110) such that the magnet unit (1) rotates about the stator (120) when the flywheel unit is in operation.

14. The flywheel unit (100) according to claim 13,
**characterised in that**
the retaining ring (2) of the magnet unit (1) is connected to the internal side (110i) of the rotor (110) by one or more flexible connecting elements (140), preferably the connecting element (140) is designed as a corrugation, hub, spoke or elastic layer.

15. A method (200) for the production of a magnet unit (1) that is suitable as an external rotor for a motor-generator unit (130) according to claim 1, preferably for flywheels (100) with high operating rotating speeds, comprising the steps of:
- providing (210) a retaining ring (2) made of a fibre composite material that has an internal side (2i) that faces a central axis (R) of the retaining ring (2);
- applying (220), at least partially, a first adhesive layer (3) onto the internal side (2i) at a first thickness (D1);
- fastening (230) a connecting panel (4) made of a load reversal-resistant material by means of the first adhesive layer (3) such that it is circumferential with respect to the internal side (2i) and comprises a multitude of axially-aligned slits (41) that form intervening spaces (42) in the connecting panel (4) and thus subdivide said connecting panel into a multitude of axially-aligned sheet metal strips (43), whereby neighbouring sheet metal strips (43) are initially connected to each other by means of connecting fins (44);
- applying (240), at least partially, a second adhesive layer (5) onto the connecting panel (4) at a second thickness (D2); and
- fastening (250) a multitude of magnet segments (6), which are at least magnetisable, next to each other such as to be in contact with each other in a circumferential arrangement (6u) on the connecting panel (4) by means of the second adhesive layer (5), whereby the respective widths (B43, B6) of the sheet metal strips (43) and of the magnet segments (6) in circumferential direction (U) of the internal side (2i) are adapted to each other appropriately such that each magnet segment (6) is glued only individually to one of the metal sheet strips (43) when it is being fastened.

16. The method (200) according to claim 15, whereby the magnet segments (6) are already magnetised appropriately before being fastened (250), such that the magnet segments (6), after being fastened (250), represent a multipole arrangement or a Halbach array or the not-yet-magnetised magnet segments (6) are magnetised (260) after being fastened (250) by means of a suitable magnetisation tool (8) to produce a multipole arrangement or a Halbach array.

## Revendications

1. Module d'aimant (1) convenant en tant qu'induit extérieur pour un module de moteur-générateur (10), de préférence pour des modules de volant d'inertie (100) avec des vitesses de rotation en fonctionnement élevées, comprenant un anneau de blocage (2) constitué d'un matériau composite fibreux avec un côté interne (2i) tourné vers un axe médian (R) de l'anneau de blocage (2) sur lequel une tôle de connexion (4) tournant autour du côté interne (2i) constituée d'un matériau résistant au cycle de l'effort est fixée au moyen d'une première couche de colle appropriée (3) avec une première épaisseur (D1), laquelle comprend une pluralité de fentes orientées axialement (41) qui forment des espaces intermédiaires (42) dans la tôle de connexion (4) et divisent ainsi cette tôle de connexion en une pluralité de bandes de tôle orientées axialement (43), dans lequel des bandes de tôle respectivement voisines (43) sont connectées l'une à l'autre au moins d'abord par le biais d'entretoises de connexion (44), et une pluralité de segments d'aimant au moins magnétisables (6) sont fixés sur la tôle de connexion (4) dans un agencement périphérique (6u) au moyen d'une seconde couche de colle (5) avec une seconde épaisseur (D2), dans lequel les largeurs respectives (B43, B6) des bandes de tôle (43) et des segments d'aimant (6) dans la direction périphérique (U) du côté interne (2i) de l'anneau de blocage sont adaptées les unes aux autres de telle sorte que chaque segment d'aimant (6) n'est collé que sur une bande de tôle respectivement propre (43) et la pluralité de segments d'aimant (6) sont disposés dans le module d'aimant (1) de manière juxtaposée en contact les uns par rapport aux autres.

2. Module d'aimant (1) selon la revendication 1,
**caractérisé en ce**
**qu'**au moins certains des espaces intermédiaires (43) sont au moins partiellement remplis d'un matériau de la première et/ou seconde couche de colle (3, 5).

3. Module d'aimant (1) selon la revendication 1 ou 2,
**caractérisé en ce**
**que** la première et/ou seconde couche de colle (3, 5) comprend un ou plusieurs écarteurs appropriés (7) dont l'extension (D7) dans la direction radiale correspond à l'épaisseur souhaitée respective (D1, D2) de la première et/ou seconde couche de colle (3, 5) et définit par le biais d'un contact avec l'anneau de blocage (2) et la tôle de connexion (4) ou avec la tôle de connexion (4) et un segment d'aimant (6) les première et/ou seconde épaisseurs respectives (D1, D2) de la première et/ou seconde couche de colle (3, 5).

4. Module d'aimant (1) selon la revendication 3,
**caractérisé en ce**
**que** les écarteurs (7) sont des billes (71), de préférence billes de verre, avec des diamètres appropriés (D7) qui sont appliquées avec la première et/ou seconde couche de colle (3, 5).

5. Module d'aimant (1) selon la revendication 3,
**caractérisé en ce**
**que** les écarteurs (7) sont un ou plusieurs fils (72) avec des diamètres appropriés (D7) qui sont disposés au moins partiellement de manière périphérique sur le côté interne (2i) ou au moins partiellement de manière périphérique sur la tôle de connexion (4) avant l'application de la première ou seconde couche de colle (3, 5).

6. Module d'aimant (1) selon la revendication 4 ou 5,
**caractérisé en ce**
**que** les diamètres appropriés (D7) sont compris entre 100 et 300 µm, de préférence entre 150 et 250 µm.

7. Module d'aimant (1) selon une des revendications précédentes,
**caractérisé en ce**
**que** la première et la seconde couche de colle (3, 5) comprennent chacune un adhésif provenant de la famille des méthacrylates.

8. Module d'aimant (1) selon une des revendications précédentes,
**caractérisé en ce**
**que** les entretoises de connexion (44) sont réalisées de manière appropriée en tant que point destiné à la rupture entre les bandes de tôle (43) afin que celles-ci rompent pendant un fonctionnement initial du module de volant d'inertie (100).

9. Module d'aimant (1) selon une des revendications précédentes,
**caractérisé en ce**
**que** l'agencement des segments d'aimant (6) sur la tôle de connexion (4) comprend au moins une pièce de compensation (61), au moins une pièce de compensation (61) comprend de préférence un moyen de fixation pour une possibilité de guidage.

10. Module d'aimant (1) selon une des revendications précédentes,
**caractérisé en ce**
**que** les segments d'aimant (6) possèdent dans la direction axiale (R1) une section transversale trapézoïdale avec un côté court (6k) et un côté long (6l) parallèle à celui-ci et des faces latérales (6s) se trouvant entre les côtés court et long.

11. Module d'aimant (1) selon la revendication 10,
**caractérisé en ce**
**que** les segments d'aimant (6) sont disposés soit en alternance avec le côté court et long (6k, 6l) par rapport à la tôle de connexion (4) en contact les uns par rapport aux autres, soit que les segments d'aimant (6) sont chacun disposés avec le côté long (6l) par rapport à la tôle de connexion (4) en contact les uns par rapport aux autres, dans lequel le rapport entre les côtés court et long (6k, 6l) des segments d'aimant respectifs (6) est ensuite adapté de telle sorte que des prolongements des faces latérales respectives (6s) des segments d'aimant (6) convergent dans l'axe médian (R) de l'anneau de blocage (2).

12. Module d'aimant (1) selon la revendication 10 ou 11,
**caractérisé en ce**
**que** les segments d'aimant (6) sont enrobés d'une couche de contact (62) au moins sur un côté (6s), la couche de contact (62) se compose de préférence de Ni, Cu ou Sn ou de plusieurs couches de ces matériaux ou d'un matériau convenant à la passivation chimique.

13. Module de volant d'inertie (100) comprenant un rotor interne au moins partiellement creux (110) constitué d'un matériau composite fibreux avec un côté interne (110i) et un module d'aimant (1) selon la revendication 1 disposé de manière appropriée sur le côté interne (110i) du rotor (110), lequel forme avec un stator (120) un module de moteur-générateur (130) pour la rotation du rotor (110), dans lequel le module d'aimant (1) est monté sur le côté interne (110i) du rotor (110) de telle sorte que le module d'aimant (1) tourne autour du stator (120) lors du fonctionnement du module de volant d'inertie.

14. Module de volant d'inertie (100) selon la revendication 13,
**caractérisé en ce**
**que** l'anneau de blocage (2) du module d'aimant (1) est connecté par le biais d'un ou plusieurs éléments de connexion flexibles (140) au côté interne (110i) du rotor (110), l'élément de connexion (140) est de préférence réalisé en tant que jonc, moyeu, rayon de roue ou couche élastique.

15. Procédé (200) de fabrication d'un module d'aimant (1) convenant en tant qu'induit extérieur pour un module de moteur-générateur (130) selon la revendication 1, de préférence pour des volants d'inertie (100) avec des vitesses de rotation en fonctionnement élevées, comprenant les étapes de :
- mise à disposition (210) d'un anneau de blocage (2) constitué d'un matériau composite fibreux avec un côté interne (2i) tourné vers un axe médian (R) de l'anneau de blocage (2) ;
- application au moins partielle (220) d'une première couche de colle (3) sur le côté interne (2i) avec une première épaisseur (D1) ;
- fixation (230) d'une tôle de connexion (4) constituée d'un matériau résistant au cycle de l'effort au moyen de la première couche de colle (3) de manière périphérique sur le côté interne (2i), laquelle comprend une pluralité de fentes orientées axialement (41) qui forment des espaces intermédiaires (42) dans la tôle de connexion (4) et divisent ainsi celle-ci en une pluralité de bandes de tôle orientées axialement (43), dans lequel des bandes de tôle respectivement voisines (43) sont connectées l'une à l'autre au moins d'abord par le biais d'entretoises de connexion (44) ;
- application au moins partielle (240) d'une seconde couche de colle (5) sur la tôle de connexion (4) avec une seconde épaisseur (D2) ; et
- fixation (250) d'une pluralité de segments d'aimant au moins magnétisables (6) de manière juxtaposée au moyen de la seconde couche de colle (5) en contact les uns par rapport aux autres dans un agencement périphérique (6u) sur la tôle de connexion (4), dans lequel les largeurs respectives (B43, B6) des bandes de tôle (43) et des segments d'aimant (6) dans la direction périphérique (U) du côté interne (2i) sont adaptées les unes aux autres de telle sorte que chaque segment d'aimant (6) n'est collé qu'individuellement à chaque fois sur une des bandes de tôle (43) lors de la fixation.

16. Procédé (200) selon la revendication 15, dans lequel les segments d'aimant (6) sont déjà magnétisés avant la fixation (250) de telle sorte que les segments d'aimant (6) représentent après leur fixation (250) un agencement multipolaire ou un agencement d'Halbach ou les segments d'aimant pas encore magnétisés (6) sont magnétisés (260) après leur fixation (250) au moyen d'un outil de magnétisation approprié (8) en un agencement multipolaire ou un agencement d'Halbach.
